# EUROPÄISCHE PATENTSCHRIFT

(11) **EP 0 950 842 B1**
(45) Veröffentlichungstag und Bekanntmachung des Hinweises auf die Patenterteilung: **16.07.2003**
(21) Anmeldenummer: 99114922.0
(22) Anmeldetag: 26.03.1996
(51) Int. Cl.: F16J 15/08

(54) **Metallische Zylinderkopfdichtung**
Metallic cylinder head gasket
Joint de culasse métallique

(30) Priorität: 08.04.1995 DE 19513360; 08.04.1995 DE 19513361; 08.04.1995 DE 19513362
(43) Veröffentlichungstag der Anmeldung: 20.10.1999
(62) Teilanmeldung aus: 96104758.6
(73) Patentinhaber: Elring Klinger AG, 72581 Dettingen (DE)
(72) Erfinder: Dickhaut-Koop, Reinhardt, Dr. rer. nat. Dipl.-Ing., 65510 Idstein (DE); Eckert, Dieter, 73207 Plochingen (DE); Werz, Ulrich, 72581 Dettingen (DE); Diez, Armin, 73252 Lenningen-Gutenberg (DE); Böhringer, Peter, 72584 Hülben (DE)
(74) Vertreter: Sparing - Röhl - Henseler Patentanwälte

(56) Entgegenhaltungen:
- EP-A- 0 230 804
- EP-A- 0 306 766
- EP-A- 0 544 215
- EP-A- 0 633 396
- US-A- 5 211 408

## Beschreibung

Die Erfindung betrifft eine metallische Zylinderkopfdichtung nach dem Oberbegriff des Anspruchs 1.

Aus der EP 0 306 766 C1 bzw. der EP 0 230 804 C1 ist eine derartige metallische Zylinderkopfdichtung für eine Brennkraftmaschine bekannt, bei der ein Trägerblech zusammen mit mindestens einem gesickten Deckblech als Funktionsblech vorgesehen sind. Da sich der Dichtspalt zwischen Zylinderkopf und -block einer Brennkraftmaschine im Betrieb in Abhängigkeit vom Arbeitstakt des jeweils betrachteten Zylinders ändert, ist die Dichtung ständigen Pressungsänderungen unterworfen und muß zur Aufrechterhaltung einer einwandfreien Abdichtung dauerhafte Federungseigenschaften aufweisen.

Die Abdichtung wird hierbei durch eine Überhöhung der Zylinderkopfdichtung entlang des Brennraums und durch eine dahinter liegende Sicke vorgenommen. Letztere wirkt als Federelement und folgt infolge des Zünddrucks auftretenden vertikalen Relativbewegungen des Zylinderkopfs gegenüber dem Zylinderblock. Einerseits darf bei maximal belasteter Sicke keine unzulässig große Verformung auftreten, andererseits darf die Entlastung nicht vollständig, sondern nur soweit erfolgen, daß eine Mindestverformung beim höchsten auftretenden Brennraumdruck die erforderliche Abdichtung sicherstellt. Zwischen diesen beiden Eckpunkten der Verformung liegt der Arbeitsbereich der Sicke.

Um die Funktion der Sicke sicherzustellen, darf die Sicke also weder beim Einbau der Dichtung, noch im Betriebszustand vollständig verformt werden. Eine unzulässig große Verformung der Sicke vertikal zur Dichtungsebene wird bei den bekannten Dichtungen durch einen Verformungsbegrenzer gleichbleibender Stärke verhindert, der zugleich zur Überhöhung der Dichtung entlang des Brennraums dient.

Aus US-A-5 211 408 ist eine Zylinderkopfdichtung bekannt, bei der ein Trägerblech vorgesehen ist, beidseitig von dem jeweils ein gesicktes Deckblech angeordnet ist, wobei die Sicke um den Brennkammerrand herum verläuft. Das Trägerblech ist hierbei beidseitig jeweils mit einer um den Brennkammerrand verlaufenden, im Schnitt dreieckige Kerbe versehen, die die entsprechende Sicke des jeweiligen Deckblechs teilweise aufnimmt. Hierbei wird die Sicke seitlich in ihren Schrägbereichen abgestützt, während der Grund der Kerbe frei bleibt. Auf diese Weise wird der Sickenaufstandsbereich beseitigt. Ein Profilierung der Kerbe in Umfangsrichtung ist nicht vorhanden, sie ist von gleichbleibendem Querschnitt.

Aufgabe der Erfindung ist es, eine metallische Zylinderkopfdichtung der eingangs genannten Art zu schaffen, bei der der Sickenarbeitsbereich über den Brennraumumfang vergleichmäßigt ist.

Diese Aufgabe wird entsprechend dem kennzeichnenden Teil des Anspruchs 1 gelöst.

Dadurch, daß der innere Verformungsbegrenzer einen Anschlag für das oder die Deckbleche im eingespannten Zustand der Dichtung aufweist und die Deckbleche einen radialen Abstand bzw. Überstand gegenüber dem Anschlag haben, stoßen ab einer bestimmten Höhenverformung der Sicke und damit einer bestimmten Längenänderung der Deckbleche diese an den Anschlag an. Hierdurch geht eine weitere Einfederung der Sicke nicht mehr mit einer Längenänderung der Deckbleche einher, so daß sich eine Art Froschfedereffekt ergibt und zur weiteren Verformung der Sicke bis zu ihrer Auflage auf dem Verformungsbegrenzer ein erheblich höherer Kraftaufwand erforderlich ist. Auf diese Weise wird eine höhere Federkraft der Sicke erreicht, wobei der Maximalwert letztlich von der Auflage auf dem Verformungsbegrenzer und dessen Höhenprofilierung abhängt.

Weitere Ausgestaltungen der Erfindung sind der nachfolgenden Beschreibung und den Unteransprüchen zu entnehmen.

Die Erfindung wird nachstehend anhand eines in den beigefügten Abbildungen dargestellten Ausführungsbeispiels näher erläutert.
Fig. 1 zeigt schematisch und ausschnittweise eine Draufsicht auf eine Zylinderkopfdichtung.
Fig. 2 zeigt ausschnittweise einen Schnitt längs der Linie I-I von Fig. 1.

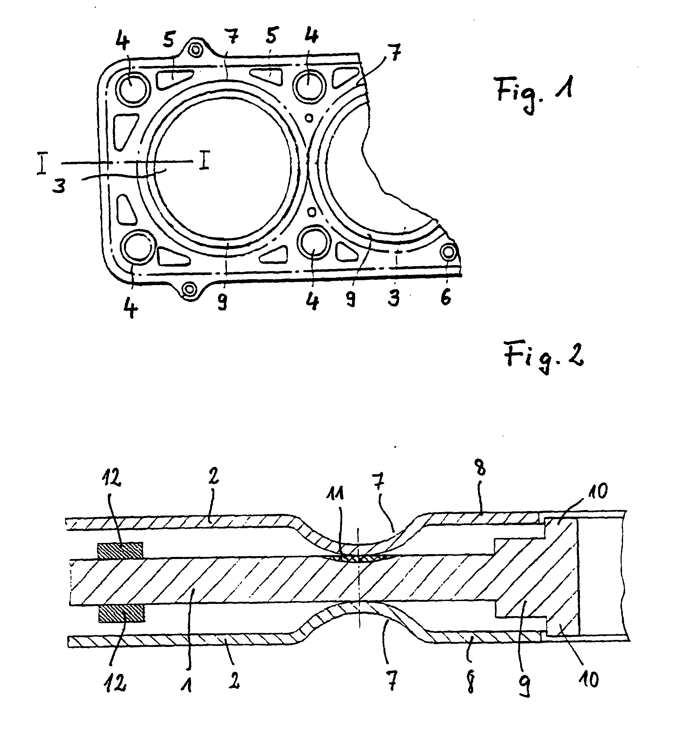

Die in Fig. 1 und 2 dargestellte Zylinderkopfdichtung umfaßt ein Trägerblech 1, auf dessen beiden Seiten jeweils ein Deckblech 2 angeordnet ist. Die Dichtung, d.h. Trägerblech 1 und Deckbleche 2, weist eine Reihe von Öffnungen 3 entsprechend den Brennräumen der zugehörigen Brennkaftmaschine sowie Schraubendurchtrittslöcher 4 für Schrauben, die zum Verspannen von Zylinderkopf und -block verwendet werden, sowie weiterhin Durchtrittsöffnungen 5, 6 für Kühlwasser bzw. Öl auf.

Die gewöhnlich aus Federstahl hergestellten und ansonsten planen Deckbleche 2 sind mit Sicken 7 versehen, die mit Abstand unter Belassung eines geraden Blechabschnitts 8 im Randbereich der Öffnung 3 angeordnet und zum Trägerblech 1 gerichtet sind.

Ferner sind üblicherweise um die Durchtrittsöffnungen 5, 6 und die Schraubendurchtrittslöcher 4 herum nicht dargestellte Halbsicken in den Deckblechen vorgesehen.

Das ansonsten plane Trägerblech 1 ist im Randbereich der Öffnungen 3 jeweils mit einem inneren Verformungsbegrenzer 9 für die benachbarte Sicke 7 versehen. Gemäß Fig. 2 ist bei diesem Ausführungsbeispiel der Verformungsbegrenzer 9 dadurch einen im Schnitt rechteckigen Abschnitt gebildet, wobei der Verformungsbegrenzer 9 praktisch mittig zwischen den Deckblechen 2 angeordnet und somit bezüglich der Sicken 7 beider Deckbleche 2 gleichwirkend ist.

Die Stärke des Verformungsbegrenzers 9 ist derart bemessen, daß die geraden Blechabschnitte 8 der Deckbleche 2 beim Einspannen der Dichtung auf diesem zum Aufstand kommen, während gleichzeitig die Sicken 7 auf Pressung beansprucht werden. Der Verformungsbegrenzer 9 legt die Eckpunkte des Sickenarbeitsbereichs entsprechend den vorgegebenen Betriebspunkten fest, wobei zur Anpassung hiervon an vorgegebene Auslegungspunkte eine Variation der Höhen- und/oder Breitenprofilierung des Verformungsbegrenzers 9 entlang des Umfangs der Öffnung 3 vorgesehen sein kann. Die Höhenprofilierung kann durch entsprechende Bearbeitung des Verformungsbegrenzers 9 erfolgen. Die Breitenprofilierung kann bei dieser Ausführungsform durch Anbringen eines entsprechenden Ausschnitts für die Öffnung 3 erfolgen.

Im Bereich benachbart zu den Schraubendurchtrittslöchern 4 ist bei einer Höhenprofilierung die Höhe des Verformungsbegrenzers 9 niedriger als in den Zwischenschraubenbereichen und bei einer Breitenprofilierung ist die Breite des Verformungsbegrenzers 9 im Bereich benachbart zu den Schraubendurchtrittslöchern 4 geringer als in den Zwischenschraubenbereichen.

Anstatt die Breite des Verformungsbegrenzers 9 unmittelbar zu variieren, kann auch der Auflagebereich der Deckbleche 2 durch einen entsprechend unrunden Ausschnitt für die Öffnung 3 variiert werden.

Der Verformungsbegrenzer 9 ist zusätzlich durch Ausbildung einer Stufe mit einem Anschlag 10 versehen, der ebenfalls in variabler Weise höhen- und/oder breitenprofiliert sein kann. Die Deckbleche 2 haben einen radialen Abstand bzw. Überstand gegenüber dem Anschlag 10, so daß ab einer bestimmten Höhenverformung der Sicke 7 und damit einer bestimmten Längenänderung der Deckbleche 2 diese an den Anschlag 10 anstoßen. Hierdurch geht eine weitere Einfederung der Sicke 7 nicht mehr mit einer Längenänderung der Deckbleche 2 einher, so daß zur weiteren Verformung der Sicke 7 bis zu ihrer Auflage auf dem Verformungsbegrenzer 9 ein erheblich höherer Kraftaufwand erforderlich ist. Auf diese Weise wird eine höhere Federkraft der Sicke erreicht, wobei der Maximalwert letztlich von der Auflage auf dem Verformungsbegrenzer 9 und dessen Höhenprofilierung abhängt.

Für die Sicke 7 kann zusätzlich ein weiterer, äußerer Verformungsbegrenzer 12 vorgesehen sein, der konzentrisch zu dem Vorformungsbegrenzer 9, jedoch auf der diesem abgekehrten Seite der Sicke 7, d.h. auf der brennraumabgekehrten Seite der Sicke 7 angeordnet ist. Infolge des Zusammenwirkens beider Verformungsbegrenzer 9, 12 läßt sich erreichen, daß die Einfederung der Sicke 7 praktisch senkrecht zur Dichtungsebene erfolgt.

Auch der Verformungsbegrenzer 12, der entweder an dem zugehörigen Deckblech 2 oder insbesondere am Trägerblech beispielweise durch Kleben oder Schweißen befestigt ist, kann ebenfalls in variabler Weise höhen- und/ oder breitenprofiliert sein. Da der Verformungsbegrenzer 12 weiter außen liegt, sind die Kräfteverhältnisse nicht mit denen im Bereich des inneren Verformungsbegrenzers 9 identisch, dementsprechend kann die Variation der Höhen- und/ oder Breitenprofilierung unterschiedlich sein.

Wie aus Fig. 2 ersichtlich, kann das Trägerblech 1 im Aufstandsbereich der Sicken 7 zusätzlich zur Anpassung der Eckpunkte des Sickenarbeitsbereichs an konstruktiv vorgegebene Auslegungspunkte in seinem Niveau variiert sein. Dies kann durch eine über den Brennraumumfang unterschiedliche Vertiefung 11 (Prägung) und/oder eine Erhöhung (Auftragung) des betreffenden Trägerblechabschnitts geschehen.

Der Verformungsbegrenzer 9 kann auch vom Trägerblech 1 getrennt ausgebildet und gegebenenfalls mit diesem verschweißt sein.

## Patentansprüche

1. Metallische Zylinderkopfdichtung für eine Brennkraftmaschine, mit wenigstens einem Deckblech (2) und einem Trägerblech (1), die übereinander angeordnet sind und die mit Schraubendurchtrittslöchern (4) und mit einer Öffnung (3) oder mit mehreren nebeneinander angeordneten Öffnungen (3) entsprechend den Brennkammern der Brennkraftmaschine versehen sind, wobei in dem wenigstens einen Deckblech (2) um jede Öffnung (3) herum mit Abstand zu dieser unter Belassung eines geraden Blechabschnitts (8) im Öffnungsrandbereich eine zum Trägerblech (1) weisende Sicke (7) vorgesehen ist, für deren Schutz benachbart zu dieser um jede Öffnung (3) herum verlaufend ein innerer Verformungsbegrenzer (9) vorgesehen ist, auf dem das wenigstens eine Deckblech (2) im eingespannten Zustand der Dichtung aufliegt, **dadurch gekennzeichnet, daß** eine sich in Umfangsrichtung des Sickenaufstandsbereichs erstreckende, Vertiefungen (11) und/oder Erhöhungen aufweisende Profiländerung des Trägerblechs (1) vorgesehen ist.

2. Zylinderkopfdichtung nach Anspruch 1, **dadurch gekennzeichnet, daß** die Vertiefungen (11) geprägt sind.

3. Zylinderkopfdichtung nach Anspruch 1 oder 2, **dadurch gekennzeichnet, daß** der innere Verformungsbegrenzer (9) zusätzlich zur Auflagefläche für das wenigstens eine Deckblech (2) einen Anschlag (11) für das wenigstens eine Deckblech (2) im eingespannten Zustand der Dichtung aufweist.

4. Zylinderkopfdichtung nach Anspruch 3, **dadurch gekennzeichnet, daß** der innere Verformungsbegrenzer (9) im Schnitt etwa rechteckig ist.

5. Zylinderkopfdichtung nach einem der Ansprüche 1 bis 4, **dadurch gekennzeichnet, daß** auf jeder Seite des Trägerblechs (1), auf der sich ein Deckblech (2) befindet, auf der der jeweiligen Öffnung (3) abgewandten Seite der Sicke (7) ein äußerer Verformungsbegrenzer (12) konzentrisch zum inneren Verformungsbegrenzer (9) für die benachbarte Sicke (7) vorgesehen ist.

6. Zylinderkopfdichtung nach Anspruch 5, **dadurch gekennzeichnet, daß** der äußere Verformungsbegrenzer (12) entsprechend einer gleichmäßigen Kraftverteilung im Öffnungsrandbereich in Umfangsrichtung höhen- und/oder breitenveränderlich ist.

7. Zylinderkopfdichtung nach einem der Ansprüche 1 bis 6, **dadurch gekennzeichnet, daß** der innere Verformungsbegrenzer (9) entsprechend einer gleichmäßigen Kraftverteilung im Öffnungsrandbereich in Umfangsrichtung höhenund/oder breitenveränderlich ist.

8. Zylinderkopfdichtung nach einem der Ansprüche 1 bis 7, **dadurch gekennzeichnet, daß** das Trägerblech (1) zwischen zwei gesickten Deckblechen (2) angeordnet ist und der innere Verformungsbegrenzer (9) etwa mittig zwischen beiden Deckblechen (2) angeordnet ist.

## Claims

1. Metallic cylinder head gasket for an internal combustion engine, with at least the one cover plate (2) and one carrier plate (1) arranged one above the other and with through bolt holes (4) and a passage (3) or with several passages (3) arranged side by side, corresponding with the combustion chambers of the internal combustion engine, whereby a bead (7) pointing to the carrier plate (1) is provided in at least the one cover plate (2) around each passage (3), in the edge region of the passage, at a distance from it, by leaving a straight plate section (8), for the protection of which an inner deformation limiter (9) extending around each passage (3) is provided, on which at least the one cover plate (2) rests when the gasket is in its relaxed state, **characterised in that** changes in the profile of the carrier plate (1) having depressions (11) and/or rises extending in the peripheral direction of the bead contact area are provided.

2. Cylinder head gasket according to Claim 1, **characterised in that** the depressions (11) are stamped.

3. Cylinder head gasket according to Claim 1 or 2, **characterised in that** the inner deformation limiter (9) has, in addition to the supporting surface for at least the one cover plate (2), a stop (11) for at least the one cover plate (2) with the gasket in a clamped state.

4. Cylinder head gasket according to Claim 3, **characterised in that** the inner deformation limiter (9) has an approximately rectangular cross-section.

5. Cylinder head gasket according to one of the Claims 1 to 4, **characterised in that** an outer deformation limiter (12) is envisaged concentrically to the inner deformation limiter (9) for the adjoining bead (7) on each side of the carrier plate (1) on which a cover plate (2) is arranged, on the side of the bead (7) away from the respective passage (3).

6. Cylinder head gasket according to Claim 5, **characterised in that** the outer deformation limiter (12) is variable in height and/or width in the peripheral direction, consistent with a uniform distribution of forces in the area of the passage.

7. Cylinder head gasket according to one of the Claims 1 to 6, **characterised in that** the inner deformation limiter (9) is variable in height and/or width in the peripheral direction, consistent with a uniform distribution of forces in the area of the passage.

8. Cylinder head gasket according to one of the Claims 1 to 7, **characterised in that** the carrier plate (1) is arranged between two beaded cover plates (2) and the inner deformation limiter (9) is arranged approximately centrally between the two cover plates (2).

## Revendications

1. Joint de culasse métallique pour un moteur à combustion interne, comprenant au moins une tôle de recouvrement (2) et une tôle support (1) qui sont disposées l'une au-dessus de l'autre et sont munies d'orifices de passage de vis (4) et d'une ouverture (3) ou de plusieurs ouvertures (3) disposées les unes à côté des autres de manière correspondant aux chambres de combustion du moteur à combustion interne, une nervure (7) tournée vers la tôle support (1) étant prévue dans la tôle de recouvrement (2) autour de chaque ouverture (3), à distance de celle-ci, en laissant un segment de tôle droit (8) dans la zone de bordure de l'ouverture, un limiteur de déformation intérieur (9) s'étendant autour de chaque ouverture (3) et sur lequel la tôle de recouvrement (2) repose lorsque le joint est dans la position de serrage, étant prévu pour la protection de la nervure, de manière adjacente à celle-ci, **caractérisé en ce qu'**il est prévu une modification du profil de la tôle support (1), présentant des creux (11) et/ou des surépaisseurs et s'étendant dans le sens circonférentiel de la zone de contact de la nervure.

2. Joint de culasse selon la revendication 1, **caractérisé en ce que** les creux (11) sont matricés.

3. Joint de culasse selon la revendication 1 ou 2, **caractérisé en ce que** le limiteur de déformation intérieur (9) présente, outre la surface d'appui pour la tôle de recouvrement (2), une butée (11) pour la tôle de recouvrement (2) lorsque le joint est dans la position de serrage.

4. Joint de culasse selon la revendication 3, **caractérisé en ce que** le limiteur de déformation intérieur (9) est de section à peu près rectangulaire.

5. Joint de culasse selon l'une quelconque des revendications 1 à 4, **caractérisé en ce qu'**il est prévu, pour la nervure voisine (7), un limiteur de déformation extérieur (12) concentrique au limiteur de déformation intérieur (9), de chaque côté de la tôle support (1) sur lequel se trouve une tôle de recouvrement (2), du côté de la nervure (7) opposé à l'ouverture (3).

6. Joint de culasse selon la revendication 5, **caractérisé en ce que** le limiteur de déformation extérieur (12) est variable en hauteur et/ou en largeur dans le sens circonférentiel de manière correspondant à une répartition des forces uniforme dans la zone de bordure de l'ouverture.

7. Joint de culasse selon quelconque l'une des revendications 1 à 6, **caractérisé en ce que** le limiteur de déformation intérieur (9) est variable en hauteur et/ou en largeur dans le sens circonférentiel de manière correspondant à une répartition des forces uniforme dans la zone de bordure de l'ouverture.

8. Joint de culasse selon l'une quelconque des revendications 1 à 7, **caractérisé en ce que** la tôle support (1) est disposée entre deux tôles de recouvrement (2) nervurées et le limiteur de déformation intérieur (9) est disposé à peu près au milieu entre les deux tôles de recouvrement (2).
